Europäisches Patentamt

European Patent Office

Office européen des brevets

(11) Publication number: **0 066 785**
**B1**

(12) **EUROPEAN PATENT SPECIFICATION**

(45) Date of publication of patent specification: **05.11.86**

(51) Int. Cl.⁴: **G 05 B 13/02**

(21) Application number: **82104602.6**

(22) Date of filing: **26.05.82**

(54) Process control apparatus.

(30) Priority: **01.06.81 JP 82512/81**

(43) Date of publication of application:
**15.12.82 Bulletin 82/50**

(45) Publication of the grant of the patent:
**05.11.86 Bulletin 86/45**

(84) Designated Contracting States:
**DE FR GB NL**

(56) References cited:
**EP-A-0 045 857**
**GB-A-2 015 771**
**ELEKTROTECHNIK UND MASCHINENBAU,
vol.87, no.1, January 1970, Vienna (AT), A.
WEINMANN: "Gegenwärtige Tendenzen in der
Regelungstechnik", pages 19-22**

**PERIODICA POLYTECHNICA, vol.15, no.3, 1971,
Electrical Engineering, Budapest (HU), P.
MAGYAR: "Ein vereinfachtes Verfahren für
adaptiv-optimale Regelung der Regelkreise mit
veränderlichen Parametern", pages 211-229**

(73) Proprietor: **Kabushiki Kaisha Toshiba
72, Horikawa-cho Saiwai-ku
Kawasaki-shi Kanagawa-ken 210 (JP)**

(72) Inventor: **Shigemasa, Takashi
553-11, Higashihongo-cho
Midori-ku Yokohama-shi (JP)**
Inventor: **Takagi, Yasuo
C-510, Toshiba-Hiyoshi-ryo 1200 Hiyoshihoncho
Kohoku-ku Yokohama-shi (JP)**

(74) Representative: **Henkel, Feiler, Hänzel & Partner
Möhlstrasse 37
D-8000 München 80 (DE)**

(56) References cited:
**ELEKTRONISCHE DATENVERARBEITUNG,
vol.10, no.6, September 1968, Braunschweig
(DE), H. KRAMER: "Optimierung eines
Regelkreises mit Tischanalogrechner und
Digitalzusatz", pages 293-296**

# 0 066 785

**Description**

The present invention relates to a process control apparatus as defined in the pre-characterizing part of the claim 1 for the Netherlands (NL) and the pre-characterizing part of the claim 1 for the Federal Republic of Germany (DE), France (FR) and the United Kingdom (GB). By virtue of Articles 54(3) and (4) EPC the content of EP—A1—0 045 857 filed 14.07.81 and published on 17.02.82 is comprised in the state of art for the designated Contracting States DE, FR and GB so that the claims have different texts for NL on the one hand and for DE, FR and GB on the other hand. Such process control apparatus is capable of determining optimum control constants according to the characteristics of a process, which is obtained by using a sampled process value under closed loop.

In a process controller, since the control constants must be determined based on the dynamic characteristic of the process, identification of the dynamic characteristic of the process is important. Identification of the dynamic characteristic is performed either in an open loop wherein the controller is disconnected from the process or in a closed loop wherein the controller is connected to the process. From the viewpoint of economy, quality control and safety, it is preferable to perform identification in a closed loop which is able to response to the dynamic characteristic change of the process in operation.

A process controller for controlling the process on the basis of the dynamic characteristic obtained in a closed loop is described, for example, in K. J. Åström and B. Wittenmark, "On Self Tuning Regulators" in "Automatica", Pergamon Press, Great Britain, Vol. 9, pp. 185—199. As this controller is of minimum variance type, when the reference value changes, a large operation signal is generated. This is not preferable in view of the energy required for generating such an operation signal. The PID controller has been used widely in industry. However, there is not a conventional PID digital controller of which the PID control constants can be automatically determined from the dynamic characteristic of the process under closed loop operation. For this reason, with the conventional PID controller, the operator manually adjusts the control constants while closely observing the response of the process value. This results in long adjustment time and troublesome operation.

The above mentioned document EP—A1—0 045 857 discloses a process control apparatus comprising control constant generating means for generating control constants according to a process signal produced from a process and control means for generating a control signal, which is to be supplied to a process, responsive to control constants generated from said control constant generating means. An identification signal generating means generates a persistently exciting identification signal and adding means add the output signals of said identification signal generating means and control signal generating means and supplies the added signal as an operation signal to a process. The control constant generating means includes a section for identifying a pulse transfer function of process in response to the process signal, a circuit for processing a transfer function in Laplace operator region from the pulse transfer function generated from said pulse transfer function identifying circuit, and a control constant generating circuit for supplying control constants to said control signal generating means responsive to the transfer function. This process control apparatus aims to enable identification of the dynamic characteristic of the process in a closed loop control and uses the identification signal to satisfy the identifiable condition of a closed-loop process. The identification signal $v^*(k)$ is a maximum length sequence signal and has no relation with the process output signal. Thus, it is necessary to change the process input signal in order to identify the dynamic characteristic of the process. However, the process output signal may be greatly changed when the identification signal has a certain value. In some field of the plant, the user wishes the process be operated in the stable state. That is, he does not wish for a great change in the process output even when the dynamic characteristic is to be identified. Further, when the process output is greatly changed, the controller must produce a large control signal. It is undesirable in view of energy, as already explained above.

Furthermore, document GB—A—2 015 771 discloses a self-adjusting regulator which comprises a digital (PID) controller, an estimating device for estimating a process characteristic, and adjusting means for adjusting parameters of the controller and for controlling a sampler. The sampling time of the sampler is automatically adjusted to enable a stable control. In this regulator, the characteristic of the process having a step response can be estimated. However, the characteristic of the process other than the above mentioned cannot be estimated.

Finally, document "Elektrotechnik und Maschinenbau", Vol. 87, No. 1, January 1970, Vienna (AT), pages 19 to 22, describes a process control apparatus which uses an adaptive controller but not a PID type controller. In this apparatus, the process characteristic can also be identified only when the type of the process matches with the type of controller, i.e., the order of the controller is the same as that of the process.

It is an object of the present invention to provide a process control apparatus which identifies the dynamic characteristic of a process in a closed loop whereby a sampled value PID control constants are automatically determined.

Relating the Contracting States DE, FR and GB the present invention provides a process control apparatus comprising first sampling means for sampling a control deviation signal of a process value signal output from a process and a reference signal, PID controlling means for generating a PID control signal according to an output signal from said first sampling means connected to said PID controlling

2

**0 066 785**

means for supplying a hold signal to the process to control the process value signal, control constant generating means for calculating sampled-PID control constants according to signals from the input and output of the process for supplying an operation result to the PID controlling means and second sampling means for sampling the process value signal, said process control apparatus being characterized by further comprising a non-linear controller, connected to an output terminal of said first sampling means and parallel to said PID controlling means, for subjecting an output signal from said first sampling means to a non-linear operation to generate a non-linear control signal, adding means for supplying to said holding means a sum signal of the PID control signal and the non-linear signal, said control constant generating means calculating the sampled-PID control constants according to output signals from said adding means and said second sampling means.

Relating the Contracting State NL the present invention provides a process control apparatus comprising first sampling means for sampling a control deviation signal of a process value signal output from a process and a reference signal, PID controlling means for generating a PID control signal according to an output signal from said first sampling means and sampled-value PID control constants, holding means connected to said PID controlling means for supplying a hold signal to the process to control the process value signal, and control constant generating means for calculating sampled-PID control constants according to signals from the input and output of the process for supplying an operation result to the PID controlling means, said process control apparatus being characterized by further comprising means, connected to an output terminal of said first sampling means, for subjecting an output signal from said first sampling means to a non-linear operation to generate a non-linear control signal, adding means for supplying to said holding means a sum signal of the PID control signal and the non-linear control signal, and second sampling means for sampling the process value signal, said control constant generating means calculating the sampled-PID control constants according to output signals from said adding means and said second sampling means.

This invention can be more fully understood from the following detailed description when taken in conjunction with the accompanying drawings, in which:

Figure 1 is an equivalent circuit diagram of a control system for explaining the principle of closed loop identification according to the present invention;

Figure 2 is a block diagram of a process control apparatus according to an embodiment of the present invention;

Figure 3 is an equivalent circuit diagram of the process for explaining the operation of the process control apparatus shown in Figure 2; and

Figures 4 to 6 are flowcharts for explaining the operation of the process control apparatus shown in Figure 2.

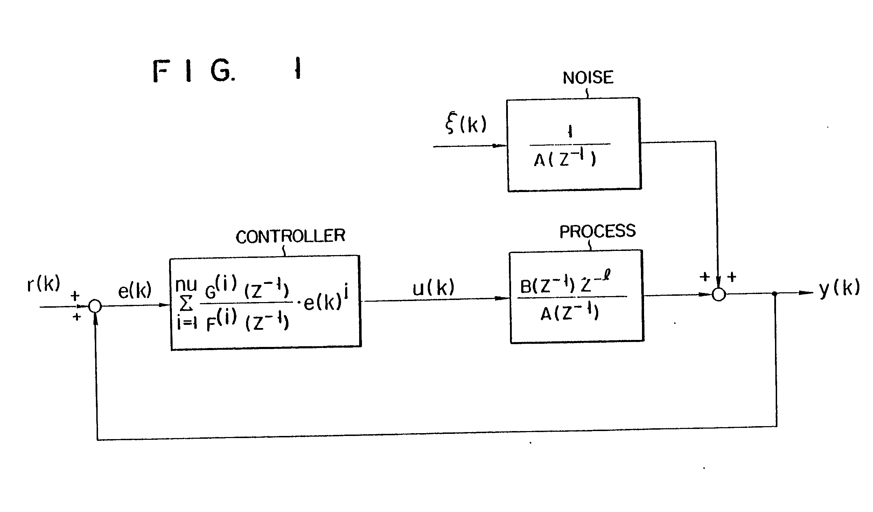

The preferred embodiment of the present invention will now be described with reference to the accompanying drawings. The feature of the process control apparatus of this embodiment resides in that a non-linear controller is used for identifying the dynamic characteristic of the process controlled in a closed loop. The principle of the present invention will first be described. More specifically, the manner according to which the non-linear controller identifies the dynamic characteristic of the process controlled in the closed loop will be described. Figure 1 shows an equivalent circuit diagram of the control system expressed discretely with respect to time. A process to be controlled is assumed to be of linear type. Let $y(k)$ denote a process value signal (output signal); $u(k)$, an input signal; $r(k)$, a reference value signal; and $\xi(k)$, a system noise. Then, the process and the controller are expressed as follows:

$$A(Z^{-1})y(k) = B(Z^{-1})Z^{-1}u(k) + \xi(k) \qquad \ldots(1)$$

$$u(k) = \sum_{i=1}^{nu} \frac{G^{(i)}(Z^{-1})}{F^{(i)}(Z^{-1})} \cdot e(k)^i \qquad \ldots(2)$$

where

$$e(k) = r(k) - y(k) \qquad \ldots(3)$$

$$A(Z^{-1}) = 1 + a_1 Z^{-1} + \ldots + a_{na} Z^{-na} \qquad \ldots(4)$$

$$B(Z^{-1}) = b_1 Z^{-1} + b_2 Z^{-2} + \ldots + b_{nb} Z^{-nb} \qquad \ldots(5)$$

$$F^{(i)}(Z^{-1}) = 1 + f_1^{(i)} Z^{-1} + \ldots + f_{nf}^{(i)} Z^{-nf} \qquad \ldots(6)$$

$$G^{(i)}(Z^{-1}) = g_0^{(i)} + g_1^{(i)} Z^{-1} + \ldots + g_{ng}^{(i)} Z^{-ng} \qquad \ldots(7)$$

It follows from this that the dynamic characteristic (i.e., the pulse transfer function in this case) of the process is

3

$$\frac{B(Z^{-1})Z^{-l}}{A(Z^{-1})} \ .$$

The conditions for identification of parameters $A(Z^{-1})$ and $B(Z^{-1})$ from the input signal $u(k)$ and the output signal $y(k)$ will be shown below. Let us define the following vectors and matrix:

$$\theta = [a_1, a_2, \ldots, a_{na}, b_1, b_2, \ldots, b_{nb}]^T \qquad \ldots(8)$$

$$Y = [y(k), y(k+1), \ldots, y(k+N-1)]^T \qquad \ldots(9)$$

$$\Theta = [\xi(k), \xi(k+1), \ldots, \xi(k+N-1)]^T \qquad \ldots(10)$$

$$\Phi = \begin{bmatrix} -y(k-1), \ldots, -y(k-na), u(k-l-1), \ldots, u(k-l-nb) \\ -y(k), \ldots, -y(k+1-na), u(k-l), \ldots, u(k+1-l-nb) \\ \ldots \\ -y(k+N-2), \ldots, -y(k+N-na-1), u(k+N-l-2), \ldots, \\ u(k+N-l-nb-1) \end{bmatrix}$$

$$\ldots(11)$$

$\theta$, $Y$, $\Theta$ and $\Phi$ hold the relation below:

$$Y = \Phi\theta + \Theta \qquad \ldots(12)$$

The least square estimation $\hat{\theta}$ of the vector $\theta$ consisting of unknown parameters is given by the relation:

$$\hat{\theta} = (\Phi^T\Phi)^{-1}\Phi^T Y \qquad \ldots(13)$$

where

$$\hat{\theta} = [\hat{a}_1, \hat{a}_2, \ldots, \hat{a}_{na}, \hat{b}_1, \hat{b}_2, \ldots, \hat{b}_{nb}]^T$$

In order that $\hat{\theta}$ be an unbiased estimation, the following condition must be satisfied:

$$\lim_{N\to\infty} \frac{1}{N}\Phi^T\Theta = 0 \qquad \ldots(14)$$

It follows from Eq. (14) that the system noise must be the white noise and $l \geqq 0$.

On the other hand, in order that $\hat{\theta}$ be the unique estimator, the following correlation matrix $R$ must be a non-singular matrix:

$$\lim_{N\to\infty} \frac{1}{N}\Phi^T\Phi = R \qquad \ldots(15)$$

The correlation matrix $R$ can be separated into the following submatrices:

4

$$R= \left( \begin{array}{c|c} R_{yy} & R_{yu} \\ \hline R_{yu}{}^T & R_{uu} \end{array} \right)$$

$$= \left[ \begin{array}{ccc|ccc} \phi_{yy}(0)\ldots\ldots\ldots & & \phi_{yy}(na-1) & -\phi_{yu}(l)\ldots\ldots\ldots & & -\phi_{yu}(l+nb-1) \\ & & & & & \\ \phi_{yy}(na-1)\ldots\ldots\ldots & & \phi_{yy}(0) & -\phi_{yu}(l-na+1)\ldots\ldots & & -\phi_{yu}(l+nb-n_a) \\ \hline -\phi_{yu}(l)\ldots\ldots\ldots & & -\phi_{yu}(l-na+1) & \phi_{uu}(0)\ldots\ldots\ldots & & \phi_{uu}(nb-1) \\ & & & & & \\ -\phi_{yu}(l+nb-1)\ldots\ldots & & -\phi_{yu}(l+nb-na) & \phi_{uu}(nb-1)\ldots\ldots\ldots & & \phi_{uu}(0) \end{array} \right]$$

$$\ldots (16)$$

where $\phi_{yy}(k)$, $\phi_{uu}(k)$ and $\phi_{yu}(k)$ are correlation functions given below:

$$\phi_{yy}{}^{(k)}= \lim_{N\to\infty} \frac{1}{N} \sum_{i=1}^{N} y(i)\, y(i+k) \qquad \ldots (17)$$

$$\phi_{uu}{}^{(k)}= \lim_{N\to\infty} \frac{1}{N} \sum_{i=1}^{N} u(i)\, u(i+k) \qquad \ldots (18)$$

$$\phi_{yu}{}^{(k)}= \lim_{N\to\infty} \frac{1}{N} \sum_{i=1}^{N} y(i)\, u(i+k) \qquad \ldots (19)$$

In order that the correlation matrix R be a non-singular matrix, the (na+nb) vectors constituting the matrix R must be linearly independent.

Since the system noise is the white noise and $l \geqq 0$, the identification condition of the dynamic characteristic of the process is that the correlation matrix R be a non-singular matrix. In a case of a non-linear controller, $nu \geqq 2$. Then, substitution of 0 for r(k), nf and ng in Eqs. (2) and (3) results in:

$$u(k)=-\sum_{i=1}^{nu} g_0{}^{(l)}\, y(k)^i \qquad \ldots (20)$$

Multiplication by y(k−j) of both sides of Eq. (20) provides:

$$\phi_{yu}(j)=-\sum_{i=1}^{nu} g_0{}^{(l)} \cdot \phi_{yyl}(j)$$

$$=-(g_0{}^{(l)},\ g_0{}^{(2)},\ \ldots\ldots,\ g_0{}^{(nu)}). \begin{pmatrix} \phi_{yy}(j) \\ \phi_{yy}2(j) \\ \vdots \\ \phi_{yy}nu(j) \end{pmatrix}$$

$$\ldots (21)$$

Multiplication by u(k−j) of both sides of Eq. (20) provides:

$$\phi_{uu}(j)=(g_0^{(1)}g_0^{(2)}.....g_0^{(nu)}) .$$

$$\begin{pmatrix} \phi_{yy}(j), & \phi_{yy}2(j),...., & \phi_{yy}nu(j) \\ \phi_y2_y(j), & \phi_y2_y2(j),...., & \phi_y2_ynu(j) \\ \vdots & & \vdots \\ \phi_ynu_y(j), & ..........., & \phi_ynu_ynu(j) \end{pmatrix} \begin{pmatrix} g_0^{(1)} \\ g_0^{(2)} \\ \vdots \\ g_0(nu) \end{pmatrix}$$

$$...(22)$$

As may be seen from Eq. (21), a correlation function of high order of $y(k)$ is generated with any element of the submatrix $R_{yu}$. Therefore, we cannot constitute elements of the matrix $R_{yu}$ even with all the elements of the matrix $R_{yy}$. As also seen from Eq. (22), a correlation function of higher order than that for the matrix $R_{yu}$ is generated for the matrix $R_{uu}$. Thus, the matrix $R$ is always non-singular.

From the above description, it is seen that the dynamic characteristic of the process in a closed control loop may be identified with a non-linear controller.

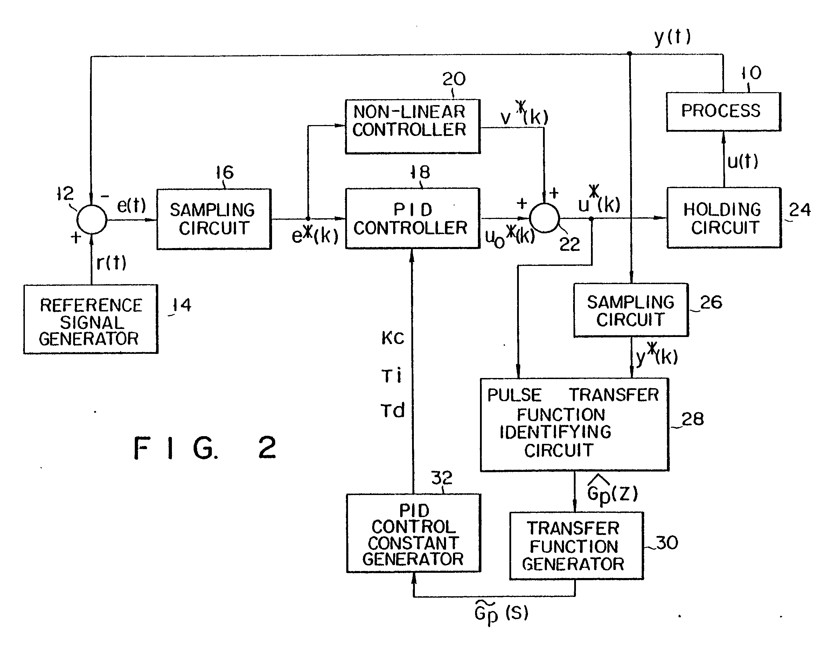

Figure 2 is a block diagram of the embodiment of the present invention. In this embodiment, a non-linear control signal is added as an auxiliary input signal to the output signal from the controller i.e. an input signal to the process. A process 10 to be controlled is a process for chemical plants, steelmaking plants and so on. The process value to be controlled is a temperature, pressure or the like. A process value is controlled by an input signal to the process 10 and is supplied as a process output signal $y(t)$ to one input end of a subtracter 12. An reference signal $r(t)$ from a reference signal generator 14 is supplied to the other input end of the subtracter 12. The subtracter 12 takes a difference between the two input signals and supplies a control deviation signal $e(t)$ $(=r(t)-y(t))$ to a sampling circuit 16. The sampling circuit 16 samples the difference signal $e(t)$ at a constant period $\tau$ and supplies a sampled difference signal $e^*(k)$ to a PID controller 18 and a non-linear controller 20. Symbol $*$ denotes a sampled signal and $t=k\tau$. Although the PID controller 18 alone does not satisfy the identification condition of the dynamic characteristic of the process as described above, these conditions are satisfied by supplementarily using the non-linear controller 20. The PID controller 18 processes the sampled difference signal $e^*(k)$ in accordance with the PID algorithm of known velocity type to be shown below using sampled-value PID control constants $Kc$ (proportional gain), $Ti$ (integration time constant), and $Td$ (differentiation time constant). The PID controller 18 then produces a control signal $u_0^*(k)$.

$$u_0^*(k)=u_0^*(k-1)+\Delta u_0^*(k) \qquad ...(23)$$

$$\Delta u_0^*(k)=Kc[e^*(k)-e^*(k-1)+\frac{\tau}{Ti}e^*(k)+\frac{Td}{\tau}\{e^*(k)-2e^*(k-1)+e^*(k-2)\}] \qquad ...(24)$$

The non-linear operation of the non-linear controller 20 is expressed by $v^*(k)=F(Z^{-1}, e^*(k))$ where $v^*(k)$ is a non-linear signal generated by the generator 20. Since the non-linear signal preferably contains high harmonics, on ON/OFF signal is used, for example. Thus, the non-linear controller 20 generates the non-linear signal $v^*(k)$ expressed by the following relation:

$$v^*(k)=Ar \cdot sign(e^*(k)) \qquad ...(25)$$

where $Ar$ is a constant, and

$$sign (e^*(k))=1 \qquad if \ e^*(k)\geqq 0$$
and
$$=-1 \qquad if \ e^*(k)<0$$

The control signal $u_0^*(k)$ from the PID controller 18 and the non-linear signal $v^*(k)$ from the non-linear controller 20 are supplied to an adder 22 which generates a sum signal $u^*(k)=u_0^*(k)+v^*(k)$ of the input signals. This sum signal is supplied to a holding circuit 24 for holding of 0th order expressed by

$$\frac{1-e^{-\tau s}}{s} .$$

The holding circuit 24 thus supplies a continuous control signal $u(t)$ to the process 10. The process value is then controlled by the control signal $u(t)$. Since the non-linear signal $v^*(k)$ is contained in the control signal $u(t)$, the dynamic characteristic of the process can be identified in a closed control loop.

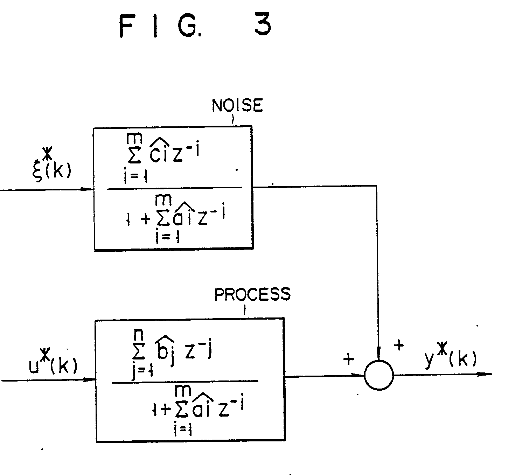

Meanwhile, the output signal $y(t)$ from the process 10 is also supplied to a sampling circuit 26 which operates in synchronism with the sampling circuit 16. The sum signal u*(k) (input signal to the process 10 through the holding circuit 24) from the adder 22 and the output signal y*(k) from the sampling circuit 26 are supplied to a pulse transfer function identifying circuit 28. The identification method of this circuit 28 adopts an identification filter of recursive approximation maximum likelihood type which resembles the algorithm of a Kalman filter. Figure 3 shows an equivalent circuit diagram of the process in order to explain this identification algorithm. The identified values of parameters $\hat{a}_i$, $\hat{b}_j$, and $\hat{c}_i$ (where i=1, 2,. . ., m, and j=1, 2,. . ., n) of the dynamic characteristic are represented by vector $\hat{\theta}$ given below:

$$\hat{\theta}^T=[\hat{a}_1,\ \hat{a}_2,\ .\ .\ .,\ \hat{a}_m,\ \hat{b}_1,\ \hat{b}_2,\ .\ .\ .,\ \hat{b}_n,\ \hat{c}_1,\ \hat{c}_2,\ .\ .\ .,\ \hat{c}_m] \qquad \ldots(26)$$

$\hat{\theta}$ can be obtained by the algorithm of Eqs. (27) to (33) given below:

$$\hat{\theta}(k)=\hat{\theta}(k-1)+\frac{P(k-1)\cdot\psi(k)\cdot\varepsilon(k)}{\lambda(k)+\psi^T(k)\cdot P(k-1)\cdot\psi(k)} \qquad \ldots(27)$$

where p(k) is a matrix of {(n+2m)×(n+2m)}th order given by Eq. (28), $\varepsilon(k)$ is an identification error given by Eq. (29), and $\psi(k)$ is a vector of (n+2m)th order given by Eq. (30).

$$P(k)=\{P(k-1)-\frac{P(k-1)\cdot\psi(k)\cdot\psi^T(k)\cdot P(k-1)}{\lambda(k)+\psi^T(k))\cdot P(k-1)\cdot\psi(k)}\}/\lambda(k) \qquad \ldots(28)$$

$$\varepsilon(k)=y*(k)-\Phi^T(k)\cdot\hat{\theta}(k-1)$$

$$=y*(k)-[-y*(k-1),\ -y*(k-2),.\ .\ .,\ -y*(k-m),$$

$$u*(k-1),\ u*(k-2),.\ .\ .,\ u*(k-n),\ \varepsilon(k-1),$$

$$\varepsilon(k-2),.\ .\ .,\ \varepsilon(k-m)]\times\hat{\theta}(k-1) \qquad \ldots(29)$$

$$\psi^T(k)=[-\widetilde{y}(k-1),\ -\widetilde{y}(k-2),.\ .\ .,\ -\widetilde{y}(k-m),$$

$$\widetilde{u}(k-1),\ \widetilde{u}(k-2),.\ .\ .,\ \widetilde{u}(k-n),\ \widetilde{\varepsilon}(k-1),$$

$$\widetilde{\varepsilon}(k-2),.\ .\ .,\ \widetilde{\varepsilon}(k-m)] \qquad \ldots(30)$$

Elements of the vector $\psi^T(k)$ can be approximated as follows:

$$\widetilde{y}(k)=\frac{y*(k)}{1+\overset{m}{\underset{i=1}{\Sigma}}\hat{C}iZ^{-i}} \qquad \ldots(31)$$

$$\widetilde{u}(k)=\frac{u*(k)}{1+\overset{m}{\underset{i=1}{\Sigma}}\hat{C}iZ^{-i}} \qquad \ldots(32)$$

$$\widetilde{\varepsilon}(k)=\frac{\varepsilon(k)}{1+\overset{m}{\underset{i=1}{\Sigma}}\hat{C}iZ^{-1}} \qquad \ldots(33)$$

Symbol $\lambda(k)$ is a forgetting factor which is $\alpha(0.95\leqq\alpha\leqq1)$ in this case. The initial values for $\hat{\theta}(0)$ and for P(0) are respectively 0 and $\beta\cdot I$ (where $\beta$ is a real number of $10^3$ to $10^5$ and I is a unit matrix).

Every sampling time the input signal u*(k) and output signal y*(k) are received, the pulse transfer function identifying circuit 28 calculates the parameters $\hat{a}_i$ (where i=1, 2,. . ., m) and $\hat{b}_j$ (where j=1, 2,. . ., n) representing the dynamic characteristic of the process in accordance with the algorithm as described above. Using these parameters, the pulse transfer function identifying circuit 28 identifies a pulse transfer function

7

$$\hat{G}p(Z)=\frac{\displaystyle\sum_{j=1}^{n}\hat{b}_j Z^{-j}}{1+\displaystyle\sum_{i=1}^{m}\hat{a}_i Z^{-i}}$$

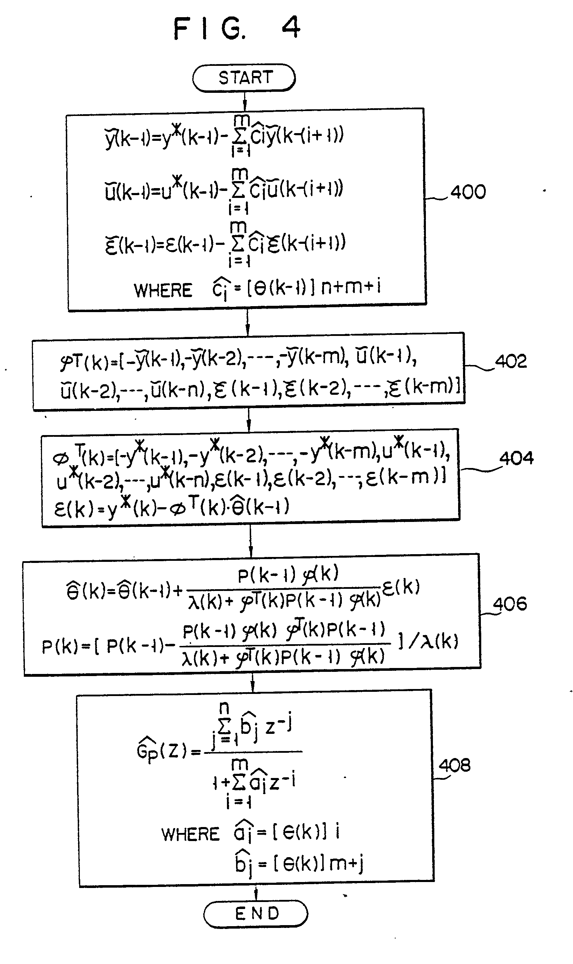

of the process. Figure 4 is a flowchart showing the operation of the pulse transfer function identifying circuit 28. In step 400, elements $\tilde{y}$, $\tilde{u}$ and $\tilde{\varepsilon}$ of the vector $\psi^T(k)$ are calculated. In step 402, the vector $\psi^T(k)$ is constituted according to Eq. (30). In step 404, a vector $\phi^T(k)$ is constituted and the identification error $\varepsilon(k)$ is calculated according to Eq. (29). In step 406, the matrix P(k) and the vector $\hat{\theta}(k)$ are obtained according to Eqs. (28) and (27). In step 408, the pulse transfer function $\hat{G}p(Z)$ is obtained using the parameters $\hat{a}_i$ and $\hat{b}_j$ in the identified vector $\hat{\theta}(k)$.

The pulse transfer function $\hat{G}p(Z)$ thus obtained is supplied to a transfer function generator 30 which obtains the transfer function of the process in the Laplace operator (S) domain. The transfer function generator 30 operates according to the algorithm utilizing the fact that the step response of the pulse transfer function $\hat{G}p(Z)$ coincides that of the actual process. By division of the numerator:

$$\sum_{j=i}^{n}\hat{b}_j Z^{-j}$$

by the denominator:

$$1+\sum_{i=1}^{m}\hat{a}_i Z^{-i}$$

the pulse transfer function $\hat{G}p(Z)$ can be rewritten as:

$$\hat{G}p(Z)=\sum_{i=1}^{\infty}\ddot{g}_i Z^{-i} \qquad \ldots(34)$$

Therefore, the step response x(k) of the pulse transfer function $\hat{G}p(Z)$ is given by:

$$x(k)=\sum_{i=1}^{k}\hat{g}_i \qquad \ldots(35)$$

$\tilde{x}(k)$ is a discrete function and its continuous function $\tilde{x}(t)$ is given by:

$$\tilde{x}(t)=\sum_{i=0}^{n-1}\hat{g}_i+\frac{g_m}{\lambda}\cdot t \qquad \ldots(36)$$

where $(n-1)\tau \leqq t < n\tau$

Laplace transformation of $\tilde{x}(t)$ results in $\tilde{X}(S)$ expressed by:

$$\tilde{X}(S)=\frac{e^{\tau S}-1}{\tau S^2}\cdot\sum_{i=1}^{\infty}\hat{g}_i\cdot e^{-i\tau S} \qquad \ldots(37)$$

If $\tilde{X}(S)$ is regarded as the step response of the transfer function $\tilde{G}p(S)$, $\tilde{G}p(S)$ is expressed as follows:

$$\tilde{G}p(S)=S\cdot\tilde{X}(S)=\frac{e^{\tau S}-1}{\tau S}\sum_{i=1}^{\infty}\hat{g}_i\cdot e^{-i\tau S}$$

$$=\frac{e^{\tau S}-1}{\tau S}\cdot\frac{\displaystyle\sum_{j=1}^{n}\hat{b}_j\cdot e^{-j\tau S}}{1+\displaystyle\sum_{i=1}^{m}\hat{a}_i\cdot e^{-i\tau S}} \qquad \ldots(38)$$

8

If the exponential function of Gp(S) is expanded and Gp(S) is given in a denominator expression including terms up to the third order of S, then:

$$\widetilde{G}p(s) = \cfrac{1}{\widetilde{h}_0 + \widetilde{h}_1 s + \widetilde{h}_2 s^2 + \widetilde{h}_3 s^3 + \ldots} \qquad \ldots(39)$$

$$\widetilde{h}_0 = D_0 \qquad \ldots(40)$$

$$\widetilde{h}_1 = D_1 - \frac{\tau}{2}\widetilde{h}_0 \qquad \ldots(41)$$

$$\widetilde{h}_2 = D_2 - \frac{\tau}{2}\widetilde{h}_1 - \frac{\tau^2}{6}\widetilde{h}_0 \qquad \ldots(42)$$

$$\widetilde{h}_3 = D_3 - \frac{\tau}{2}\widetilde{h}_2 - \frac{\tau^2}{6}\widetilde{h}_1 - \frac{\tau^3}{24}\widetilde{h}_0 \qquad \ldots(43)$$

$$D_0 = A_0/B_0 \qquad \ldots(44)$$

$$D_1 = (A_1 - D_0 \cdot B_1)/B_0 \qquad \ldots(45)$$

$$D_2 = (A_2 - D_0 \cdot B_2 - D_1 \cdot B_1)/B_0 \qquad \ldots(46)$$

$$D_3 = (A_3 - D_0 \cdot B_3 - D_1 \cdot B_2 - D_2 \cdot B_1)/B_0 \qquad \ldots(47)$$

$$A_0 = 1 + \sum_{i=1}^{m} \hat{a}_i \qquad \ldots(48)$$

$$A_1 = -\tau \sum_{i=1}^{m} i\hat{a}_i \qquad \ldots(49)$$

$$A_2 = \frac{\tau^2}{2} \sum_{i=1}^{m} i^2\hat{a}_i \qquad \ldots(50)$$

$$A_3 = -\frac{\tau^3}{6} \sum_{i=1}^{m} i^3\hat{a}_i \qquad \ldots(51)$$

$$B_0 = \sum_{i=1}^{n} \hat{b}_i \qquad \ldots(52)$$

$$B_1 = -\tau \sum_{i=1}^{n} i\hat{b}_i \qquad \ldots(53)$$

$$B_2 = \frac{\tau^2}{2} \sum_{i=1}^{n} i^2\hat{b}_i \qquad \ldots(54)$$

$$B_3 = -\frac{\tau^3}{6} \sum_{i=1}^{n} i^3\hat{b}_i \qquad \ldots(55)$$

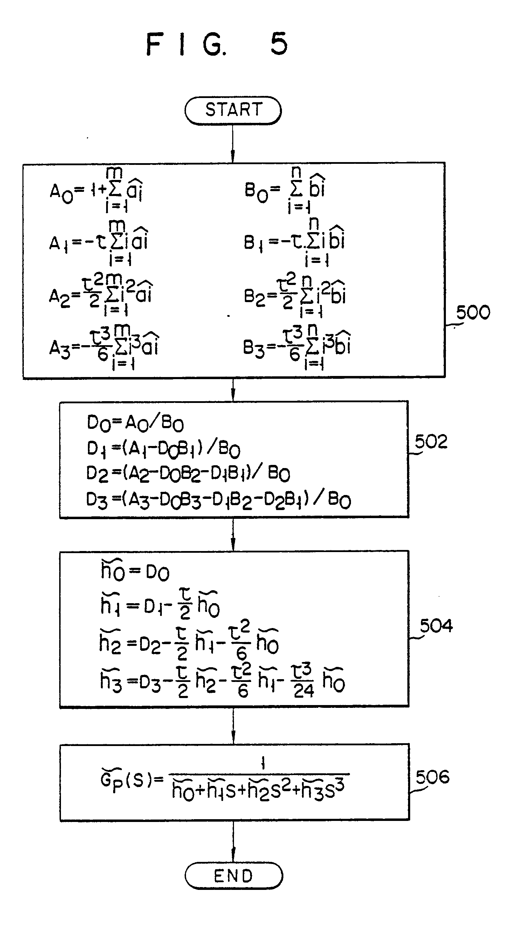

The transfer function generator 30 generates the transfer function $\widetilde{G}p(S)$ of the S domain from the pulse transfer function $\hat{G}p(Z)$ according to the algorithm as described above. Figure 5 is a flowchart showing the operation of the transfer function generator 30. In step 500, $A_0$ to $A_3$ and $B_0$ to $B_3$ are calculated

9

according to Eqs. (48) to (55). In step 502, $D_0$ to $D_3$ are calculated from $A_0$ to $A_3$ and $B_0$ to $B_3$ according to Eqs. (44) to (47). In step 504, $\tilde{h}_0$ to $\tilde{h}_3$ are calculated from $D_0$ to $D_3$ according to Eqs. (40) to (43). In step 506, the transfer function $\tilde{G}p(S)$ is obtained from $\tilde{h}_0$ to $\tilde{h}_3$ according to Eq. (39).

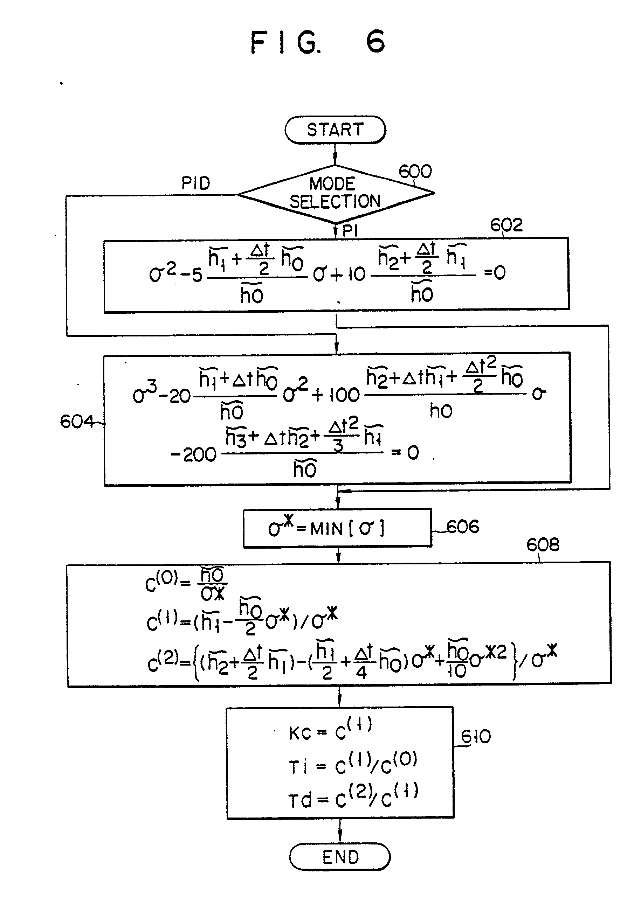

The transfer function $\tilde{G}p(S)$ output from the transfer function generator 30 is supplied to a PID control constant generator 32. According to the identified dynamic characteristic of the process, the PID control constant generator 32 calculates optimal PID control constants Kc, Ti and Td, and supplies them to the PID controller 18. The PID control constant generator 30 operates according to the method described in Toshiyuki Kitamori, "A design method for sampled-data control systems based upon partial knowledge about controlled processes" in (papers published by the Association of Measurements and Automatic Control, Vol. 15—5, September of 1979). Figure 6 shows the algorithm of the operation of the PID control constant generator 32. If the differentiation time constant Td is 0, the PID controller 18 can perform the PI operation as well. Therefore, in step 600, a selection is made between the PI operation and the PID operation. The sampling period in this case is made $\Delta t$. If the PI operation is selected in step 600, the solution of the following relation of the second roder of $\sigma$ is obtained in step 602:

$$\sigma^2 - 5\frac{\tilde{h}_1 + \dfrac{\Delta t}{2}\tilde{h}_0}{\tilde{h}_0}\sigma + 10\frac{\tilde{h}_2 + \dfrac{\Delta t}{2}\tilde{h}_1}{\tilde{h}_0} = 0 \quad \ldots(56)$$

If the PID operation is selected in step 600, the following solution of the relation of the third order of $\sigma$ is obtained:

$$\sigma^3 - 20\frac{\tilde{h}_1 + \Delta t\tilde{h}_0}{\tilde{h}_0}\sigma^2 + 100\frac{\tilde{h}_2 + \Delta t\tilde{h}_1 + \dfrac{\Delta t^2}{2}\tilde{h}_0}{\tilde{h}_0}$$

$$-200\frac{\tilde{h}_3 + \Delta t\tilde{h}_2 + \dfrac{\Delta t^2}{3}\tilde{h}_1}{\tilde{h}_0} = 0 \quad \ldots(57)$$

Of $\sigma$ obtained, the least positive value of $\sigma$ is obtained as $\sigma^*$ in step 606. In step 608, $C^{(0)}$, $C^{(1)}$ and $C^{(2)}$ as given below are obtained from $\sigma^*$ and $\tilde{h}_0$, $\tilde{h}_1$, and $\tilde{h}_2$.

$$C^{(0)} = \frac{\tilde{h}_0}{\sigma^*} \quad \ldots(58)$$

$$C^{(1)} = (\tilde{h}_1 - \frac{\tilde{h}_0}{2}\sigma^*)/\sigma^* \quad \ldots(59)$$

$$C^{(2)} = \{(\tilde{h}_2 + \frac{\Delta t}{2}\tilde{h}_1) - (\frac{\tilde{h}_1}{2} + \frac{\Delta t}{4}\tilde{h}_0)\sigma^* + \frac{\tilde{h}_0}{10}\sigma^{*2}\}/\sigma^* \quad \ldots(60)$$

The sampled-value PID controls constants Kc, Ti, and Td and $C^{(0)}$, $C^{(1)}$ and $C^{(2)}$ hold the relations below:

$$Kc = C^{(1)} \quad \ldots(61)$$

$$Ti = C^{(1)}/C^{(0)} \quad \ldots(62)$$

$$Td = C^{(2)}/C^{(1)} \quad \ldots(63)$$

In step 610, the PID control constants Kc, Ti and Td are obtained according to Eqs. (61) to (63). In this manner, the PID control constant generator 32 calculates the sampled-value PID control constants based on the dynamic characterstic of the process which has been identified and supplies them to the PID controller 18. According to the control constants received, the PID controller 18 generates a process control signal $u_0^*(k)$. Then, the process 10 is controlled according to its dynamic characteristic.

According to the embodiment of the present invention, since the non-linear signal is always included in the control signal supplied to the process, the dynamic characteristic of the process in the closed control loop can be always identified. According to the identification result obtained, the PID control constants may be determined, and the PID controller can then respond to the changes in the dynamic characteristic of the process. In this manner, the identification of the dynamic characteristic of the process and the adjustments of the PID control constants are performed simultaneously during the closed loop control of the process, so that the process may be controlled within a short period of time and the operating efficiency of the process may be improved. Since the identification of the pulse transfer function of the process is performed by the iterative method, the process control may not be adversely affected by the noise.

The present invention is not limited to the particular embodiment described above. Therefore, various changes and modifications may be made within the scope and spirit of the appended claims. Several modifications will now be described below. In the embodiment described above, the non-linear control signal generated by the non-linear controller 20 is always added to the process control signal to constantly change the processs value. However, with a process wherein change in the process value is not preferred, the non-linear signal may be selectively added to the process control signal. This may be achieved by, for example, incorporating a switch between the non-linear controller 20 and the adder 22. In this case, after the dynamic characteristic of the process is identified and the optimal PID control constants are obtained, the switch is opened so as to supply the output signal from the PID controller 18 alone to the process 10.

The recursive approximation maximum likelihood method is used for identification of the pulse transfer function of the process in the embodiment described above. However, other methods which allow calculation of unbiased and unique estimator may be adopted. Such methods may include the extended least square method, instrumental variable method, the parameter identifying method of model reference adaptive system, and so on. The non-linear operation may be hysteresis, multi-stage ON/OFF, or high-order non-linear operation in place of the ON/OFF operation.

**Claims for the Contracting States: DE, FR, GB**

1. A process control apparatus comprising first sampling means (16) for sampling a control deviation signal of a process value signal output from a process (10) and a reference signal, PID controlling means (18) for generating a PID control signal according to an output signal from said first sampling means (16) and sampled-value PID control constants, holding means (24) connected to said PID controlling means (18) for supplying a hold signal to the process (10) to control the process value signal, control constant generating means (28, 30, 32) for calculating sampled-PID control constants according to signals from the input and output of the process (10) for supplying an operation result to the PID controlling means (18) and second sampling means (26) for sampling the process value signal, characterized by further comprising a non-linear controller (20), connected to an output terminal of said first sampling means (16) and parallel to said PID controlling means (18), for subjecting an output signal from said first sampling means (16) to a non-linear operation to generate a non-linear control signal, adding means (22) for supplying to said holding means (24) a sum signal of the PID control signal and the non-linear signal, said control constant generating means (28, 30, 32) calculating the sampled-PID control constants according to output signals from said adding means (22) and said second sampling means (26).

2. A process control apparatus according to claim 1, characterized in that said non-linear operating means (20) comprises a relay which produces a signal v*(k) given:

$$v*(k)=Ar \cdot sign(e*(k))$$

where Ar is a constant, and e*(k) is an output signal from said first sampling means (16), sign(e*(k)) being 1 if e*(k)≧0 and sign(e*(k)) being −1 if e*(k)<0.

3. A process control apparatus according to claim 1, in which said control constants generating means (28, 30, 32) has an identifying circuit (28) for identifying a pulse transfer function of the process (10), a transfer function generating circuit (30), and a control constant generating circuit (32), characterized in that said identifying circuit (28) identifies a pulse transfer function of the process (10) according to the output signal from said second sampling means (26) and the sum signal of the PID control signal and the non-linear control signal, said transfer function generating circuit (30) generates a transfer function of the process (10) in a Laplace operator domain according to an output signal from the identifying circuit (28), and said control constant generating circuit (32) generates sampled-value PID control constants on the basis of the transfer function generated by the transfer function generating circuit (30).

**Claims for the Contracting State: NL**

1. A process control apparatus comprising first sampling means (16) for sampling a control deviation signal of a process value signal output from a process (10) and a reference signal, PID controlling means (18) for generating a PID control signal according to an output signal from said first sampling means (16) and sampled-value PID control constants, holding means (24) connected to said PID controlling means (18) for supplying a hold signal to the process (10) to control the process value signal, and control constant generating means (28, 30, 32) for calculating sampled-PID control constants according to signals from the input and output of the process (10) for supplying an operation result to the PID controlling means (18), characterized by further comprising means (20), connected to an output terminal of said first sampling means (16), for subjecting an output signal from said first sampling means (16) to a non-linear operation to generate a non-linear control signal, adding means (22) for supplying to said holding means (24) a sum signal of the PID control signal and the non-linear control signal, and second sampling means (26) for sampling the process value signal, said control constant generating means (28, 30, 32) calculating the sampled-PID control constants according to output signals from said adding means (22) and said second sampling means (26).

2. A process control apparatus according to claim 1, characterized in that said non-linear operating means (20) comprises a relay which produces a signal v*(k) given:

$$v^*(k)=Ar \cdot \text{sign}(e^*(k))$$

where Ar is a constant, and e*(k) is an output signal from said first sampling means (16), sign(e*(k)) being 1 if e*(k)≧0 and sign(e*(k)) being −1 if e*(k)<0.

3. A process control apparatus according to claim 1, characterized in that said first sampling means (16) and said second sampling means (26) operate in synchronism with each other.

4. A process control apparatus according to claim 1, characterized in that said control constants generating means (28, 30, 32) has a circuit (28) for identifying a pulse transfer function of the process (10) according to the outputs signal from said second sampling means (26) and the sum signal of the PID control signal and the non-linear control signal, a transfer function generating circuit (30) for generating a transfer function of the process in a Laplace operator domain according to an output signal from the identifying circuit (28), and a control constant generating circuit (32) for generating sampled-value PID control constants on the basis of the transfer function generated by the transfer function generating circuit (30).

5. A process control apparatus according to claim 4, characterized in that said identifying circuit (28) performs identification by a recursive approximation maximum likelihood filter.

**Patentansprüche für die Vertragsstaaten: DE, FR, GB**

1. Prozeßregelungsapparatus, umfassend eine erste Abtast- oder Abgreifeinheit (16) zum Abgreifen eines Regelabweichsignals eines von einem Prozeß (10) ausgegebenen Prozeßgrößensignals und eines Bezugssignals, eine PID-Regelungseinheit (18) zum Erzeugen eines PID-Regelsignals nach Maßgabe eines Ausgangssignals von der ersten Abgreifeinheit (16) und Abgreifgrößen-PID-Regelkonstanten, eine mit der PID-Regelungseinheit (18) verbundene Halteeinheit (24) zur Lieferung eines Haltesignals zum Prozeß (10) zwecks Regelung des Prozeßgrößensignals, eine Regelkonstanten-Erzeugungseinrichtung (28, 30, 32) zum Berechnen von Abgreif-PID-Regelkonstanten nach Maßgabe von Signalen vom Eingang und Ausgang des Prozesses (10) zwecks Lieferung eines Operationsergebnisses zur PID-Regelungseinheit (18) sowie eine zweite Abast- oder Abgreifeinheit (26) zum Abgreifen des Prozeßgrößensignals, gekennzeichnet durch einen mit der Ausgangsklemme der ersten Abgreifeinheit (16) verbundenen und zur PID-Regelungseinheit (18) parallelgeschalteten nicht-linearen Regler (20), um ein Ausgangssignal von der ersten Abgreifeinheit (16) einer nicht-linearen Operation für die Erzeugung eines nicht-linearen Regelsignals zu unterwerfen, (und) eine Addiereinheit (22), um der Halteeinheit (24) ein Summensignal aus dem PID-Regelsignal und dem nicht-linearen Signal zu liefern, wobei die Regelkonstanten-Erzeugungseinrichtung (28, 30, 32) die Abgreif-PID-Regelkonstanten nach Maßgabe der Ausgangssignale von der Addiereinheit (22) und der zweiten Abgreifeinheit (26) berechnet.

2. Prozeßregelungsapparat nach Anspruch 1, dadurch gekennzeichnet, daß die (der) nicht-lineare Operationseinheit (Regler) (20) ein Relais zum Erzeugen eines Signals v*(k) umfaßt, das sich ausdrücken läßt zu:

$$v^*(k)=Ar \cdot \text{sign}(e^*(k))$$

mit Ar=eine Konstante, e*(k)=ein Ausgangssignal von der ersten Abgreifeinheit (16), sign(e*(k))=1, wenn e*(k)≧0, und sign(e*(k))=−1, wenn e*(k)<0.

3. Prozeßregelungsapparat nach Anspruch 1, wobei die Regelkonstanten-Erzeugungseinrichtung (28, 30, 32) eine Identifizierschaltung (28) zum Identifizieren einer Impulsübertragungsfunktion des Prozesses (10), eine Übertragungsfunktion-Erzeugungsschaltung (30) und eine Regelkonstanten-Erzeugungsschaltung (32) aufweist, dadurch gekennzeichnet, daß die Identifizierschaltung (28) eine Impulsübertragungsfunktion des Prozesses (10) nach Maßgabe des Ausgangssignals von der zweiten Abgreifeinheit (26) und des Summensignals aus dem PIC-Regelsignal und dem nicht-linearen Regelsignal identifiziert, die Übertragungsfunktion-Erzeugungsschaltung (30) eine Übertragungsfunktion des Prozesses (10) in einer Laplace-Operatordomäne oder -einheit nach Maßgabe eines Ausgangssignals von der Identifizierschaltung (28) erzeugt und die Regelkonstanten-Erzeugungsschaltung (32) Abgreifgrößen-PID-Regelkonstanten auf der Grundlage der durch die Übertragungsfunktion-Erzeugungsschaltung (30) erzeugten Übertragungs-funktion erzeugt.

# 0 066 785

**Patentansprüche für den Vertragsstaat: NL**

1. Prozeßregelungsapparatus, umfassend eine erste Abtast- oder Abgreifeinheit (16) zum Abgreifen eines Regelabweichsignals eines von einem Prozeß (10) ausgegebenen Prozeßgrößensignals und eines Bezugssignals, eine PID-Regelungseinheit (18) zum Erzeugen eines PID-Regelsignals nach Maßgabe eines Ausgangssignals von der ersten Abgreifeinheit (16) und Abgreifgrößen-PID-Regelkonstanten, eine mit der PID-Regelungseinheit (18) verbundene Halteeinheit (24) zur Lieferung eines Haltesignals zum Prozeß (10) zwecks Regelung des Prozeßgrößensignals und eine Regelkonstanten-Erzeugungseinrichtung (28, 30, 32) zum Berechnen von Abgreif-PID-Regelkonstanten nach Maßgabe von Signalen vom Eingang und Ausgang des Prozesses (10) zwecks Lieferung eines Operationsergebnisses zur PID-Regelungseinheit (18), gekennzeichnet durch eine mit einer Ausgangsklemme der ersten Abgreifeinheit (16) verbundene Einrichtung (20), um ein Ausgangssignal von der ersten Abgreifeinheit (16) einer nichtlinearen Operation für die Erzeugung eines nicht-linearen Regelsignals zu unterwerfen, eine Addiereinheit (22), um der Halteeinyeit (24) ein Summensignal aus dem PID-Regelsignal und dem nicht-linearen Signal zu liefern, und eine zweite Abtast- oder Abgreifeinheit (26) zum Abgreifen des Prozeßgrößensignals, wobei die Regelkonstanten-Erzeugungseinrichtung (28, 30, 32) die Abgreif-PID-Regelkonstanten nach Maßgabe der Ausgangssignale von der Addiereinheit (22) und der zweiten Abgreifeinheit (26) berechnet.

2. Prozeßregelungsapparat nach Anspruch 1, dadurch gekennzeichnet, daß die nicht-lineare Operationseinheit (20) ein Relais zum Erzeugen eines Signals v*(k) umfaßt, das sich ausdrücken läßt zu:

$$v^*(k) = Ar \cdot \mathrm{sign}(e^*(k))$$

mit Ar=eine Konstante, e*(k)=ein Ausgangssignal von der ersten Abgreifeinheit (16), sign(e*(k))=1, wenn e*(k)≧0, und sign(e*(k))=−1, wenn e*(k)<0.

3. Prozeßregelungsapparat nach Anspruch 1, dadurch gekennzeichnet, daß die erste Abgreifeinheit (16) und die zweite Abgreifeinheit (26) in Synchronismus miteinander arbeiten.

4. Prozeßregelungsapparat nach Anspruch 1, dadurch gekennzeichnet, daß die Regelkonstanten-Erzeugungseinrichtung (28, 30, 32) eine Schaltung (28) zum Identifizieren einer Impulsübertragungsfunktion des Prozesses (10) nach Maßgabe des Ausgangssignals von der zweiten Abgreifeinheit (26) und des Summensignals aus dem PID-Regelsignal und dem nicht-linearen Regelsignal, eine Übertragungsfunktion-Erzeugungsschaltung (30) zum Erzeugen einer Übertragungsfunktion des Prozesses in einer Laplace-Operatordomäne oder -einheit nach Maßgabe eines Ausgangssignals von den Identifizierschaltung (28) und eine Regelkonstanten-Erzeugungsschaltung (32) zum Erzeugen von Abgreifgrößen-PID-Regelkonstanten auf der Grundlage der durch die Übertragungsfunktion-Erzeugungsschaltung (30) erzeugten Übertragungsfunktion aufweist.

5. Prozeßregelungsapparat nach Anspruch 4, dadurch gekennzeichnet, daß die Identifizierschaltung 28 eine Identifizierung mittels eines rekursiven Näherungsfilters für größte Wahrscheinlichkeit ausführt.

**Revendications pour les Etats Contractants: DE, FR, GB**

1. Appareil de commande de processus comprenant un premier moyen d'échantillonnage (16) pour échantillonner un signal de variation de commande d'un signal de sortie de valeur de processus en provenance d'un processus (10) et un signal de référence, un moyen de commande PID (18) pour produire un signal de commande PID en fonction d'un signal de sortie en provenance du premier moyen d'échantillonnage (16) et des constantes de commande PID à valeur échantillonnée, un moyen de maintien (24) connecté au moyen de commande PID (18) pour fournir un signal de maintien au processus (10) pour commander le signal de valeur de processus, un moyen de génération de constantes de commande (28, 30, 32) pour calculer les constantes de commande PID échantillonnée en fonction des signaux en provenance de l'entrée et de la sortie du processus (10) pour fournir un résultat de fonctionnément au moyen de commande PID (18), et un second moyen d'échantillonnage (26) pour échantillonner le signal de valeur de processus, caractérisé en ce qu'il comprend en outre un dispositif de commande non linéaire (20), connecté à une borne de sortie du premier moyen d'échantillonnage (16) et en parallèle avec le moyen de commande PID (18) pour soumettre un signal de sortie en provenance du premier moyen d'échantillonnage (16) à un fonctionnement non linéaire pour produire un signal de commande non linéaire, un moyen d'addition (22) pour fournir au moyen de maintien (24) un signal de somme du signal de commande PID et du signal non linéaire, ce moyen de génération de constante de commande (28, 30, 32) calculant les constantes de commande PID échantillonnées en fonction des signaux de sortie en provenance du moyen d'addition (22) et du second moyen d'échantillonnage (26).

2. Appareil de commande de processus selon la revendication 1, caractérisé en ce que le moyen de fonctionnement non linéaire (20) comprend un relais qui produit un signal v*(k) donné par:

$$v^*(k) = Ar \cdot \mathrm{signe}(e^*(k))$$

où Ar est une constante et e*(k) est un signal de sortie en provenance du premier moyen d'échantillonnage (16), signe (e*(k)) étant égal à 1 si e*(k)≧0 et signe (e*(k)) étant égal à −1 si e*(k)<0.

13

**0 066 785**

3. Appareil de commande de processus selon la revendication 1, dans lequel le moyen de génération de constantes de commande (28, 30, 32) comprend un circuit d'identification (28) pour identifier une fonction de transfert en impulsion du processus (10), un circuit de génération de fonction de transfert (30) et un circuit de génération de constantes de commande (32), caractérisé en ce que le circuit d'identification (28) identifie une fonction de transfert d'impulsion du processus (10) en fonction du signal de sortie en provenance du second moyen d'échantillonnage (26) et du signal de somme du signal de commande PID et du signal de commande non linéaire, le circuit de génération de fonction de transfert (30) produit une fonction de transfert du processus (10) dans le domaine de l'opérateur de Laplace en fonction d'un signal de sortie en provenance du circuit d'identification (28), et le circuit de génération de constantes de commande (32) produit des constantes de commande PID à valeur échantillonnées sur la base de la fonction de transfert produite par le circuit de génération de fonction de transfert (30).

**Revendications pour l'Etat Contractant: NL**

1. Appareil de commande de processus comprenant un premier moyen d'échantillonnage (16) pour échantillonner un signal de variation de commande d'un signal de sortie de valeur de processus en provenance d'un processus (10) et un signal de référence, un moyen de commande PID (18) pour produire un signal de commande PID en fonction d'un signal de sortie en provenance du premier moyen d'échantillonnage (16) et des constantes de commande PID à valeur échantillonnée, un moyen de maintien (24) connecté au moyen de commande PID (18) pour fournir un signal de maintien au processus (10) pour commander le signal de valeur de processus, et un moyen de génération de constante de commande (28, 30, 32) pour calculer les constantes de commande PID échantillonnées en fonction. des signaux en provenance de l'entrée de la sortie du processus (10) pour fournir un résultat de fonctionnement au moyen de commande PID (18), caractérisé en ce qu'il comprend en outre un moyen (20), connecté à une borne de sortie du premier moyen d'échantillonnage (16), pour soumettre un signal de sortie en provenance du premier moyen d'échantillonnage (16) à un fonctionnement non linéaire pour produire un signal de commande non linéaire, un moyen d'addition (22) pour fournir au moyen de maintien (24) un signal de somme du signal de commande PID et du signal non linéaire, et un second moyen d'échantillonnage (26) pour échantillonner le signal de valeur de processus, le moyen de génération de constantes de commande (28, 30, 32) calculant les constantes de commande PID échantillonnées en fonction des signaux de sortie en provenance du moyen d'addition (22) et du second moyen d'échantillonnage (26).

2. Appareil de commande de processus selon la revendication 1, caractérisé en ce que le moyen de fonctionnement linéaire (20) comprend un relais qui produit un signal v*(k) donné par:

$$v*(k)=Ar \cdot signe(e*(k))$$

où Ar est une constante et e*(k) est un signal de sortie en provenance du premier moyen de chaque image (16), signe (e*(k)) étant égal à 1 si e*(k)$\geq$0 et signe (e*(k)) étant égal à −1 si e*(k)<0.

3. Appareil de commande de processus selon la revendication 1, caractérisé en ce que le premier moyen d'échantillonnage (16) et le second moyen d'échantillonnage (26) fonctionnent en synchronisme l'un avec l'autre.

4. Appareil de commande de processus selon la revendication 1, caractérisé en ce que le moyen de génération de constantes de commande (28, 30, 32) comprend un circuit d'identification (28) pour identifier une fonction de transfert en impulsion du processus (10) en fonction du signal en provenance du second moyen d'échantillonnage (26) et du signal de somme du signal de commande PID et du signal de commande non linéaire, un circuit de génération de fonction de transfert (30) pour produire une fonction de transfert du processus dans le domaine de l'opérateur de Laplace en fonction d'un signal de sortie en provenance du circuit d'identification (28), et un circuit de génération de constantes de commande (32) pour produire des constantes de commande PID à valeurs échantillonnées sur la base de la fonction de transfert produite par le circuit de génération de fonction de transfert (30).

5. Appareil de commande de processus selon la revendication 4, caractérisé en ce que le circuit d'identification (28) réalise une identification par un filtre d'approche de maximum par approximations successives.

14

F I G. 1

F I G. 2

# F I G. 3

NOISE

$$\frac{\sum\limits_{i=1}^{m} \widehat{c_i} z^{-i}}{1 + \sum\limits_{i=1}^{m} \widehat{a_i} z^{-i}}$$

$\overset{*}{\xi}(k)$

PROCESS

$$\frac{\sum\limits_{j=1}^{n} \widehat{b_j} z^{-j}}{1 + \sum\limits_{i=1}^{m} \widehat{a_i} z^{-i}}$$

$u^*(k)$

$+$ $+$ $y^*(k)$

3

# F I G. 4

START

$$\bar{y}(k-1)=y^{X}(k-1)-\sum_{i=1}^{m}\hat{C}_i\bar{y}(k-(i+1))$$

$$\bar{u}(k-1)=u^{X}(k-1)-\sum_{i=1}^{m}\hat{C}_i\bar{u}(k-(i+1))$$

$$\bar{\mathcal{E}}(k-1)=\mathcal{E}(k-1)-\sum_{i=1}^{m}\hat{C}_i\bar{\mathcal{E}}(k-(i+1))$$

WHERE $\quad\hat{C}_i=[\theta(k-1)]\,n+m+i$

— 400

$$\varphi^T(k)=[-\bar{y}(k-1),-\bar{y}(k-2),---,-\bar{y}(k-m),\,\bar{u}(k-1),$$
$$\bar{u}(k-2),---,\bar{u}(k-n),\bar{\mathcal{E}}(k-1),\bar{\mathcal{E}}(k-2),---,\bar{\mathcal{E}}(k-m)]$$

— 402

$$\phi_X^T(k)=[-y^{X}(k-1),-y^{X}(k-2),---,-y^{X}(k-m),u^{X}(k-1),$$
$$u^{X}(k-2),---,u^{X}(k-n),\mathcal{E}(k-1),\mathcal{E}(k-2),--;\mathcal{E}(k-m)]$$
$$\mathcal{E}(k)=y^{X}(k)-\phi^T(k)\cdot\hat{\theta}(k-1)$$

— 404

$$\hat{\theta}(k)=\hat{\theta}(k-1)+\frac{P(k-1)\,\varphi(k)}{\lambda(k)+\varphi^T(k)P(k-1)\,\varphi(k)}\mathcal{E}(k)$$

$$P(k)=[\,P(k-1)-\frac{P(k-1)\,\varphi(k)\,\varphi^T(k)P(k-1)}{\lambda(k)+\varphi^T(k)P(k-1)\,\varphi(k)}\,]/\lambda(k)$$

— 406

$$\hat{G}_P(Z)=\frac{\sum_{j=1}^{n}\hat{b}_j\,z^{-j}}{1+\sum_{i=1}^{m}\hat{a}_i\,z^{-i}}$$

WHERE $\quad\hat{a}_i=[\theta(k)]\,i$

$$\hat{b}_j=[\theta(k)]\,m+j$$

— 408

END

# F I G. 5

$$A_0 = 1 + \sum_{i=1}^{m} \hat{a}_i \qquad B_0 = \sum_{i=1}^{n} \hat{b}_i$$

$$A_1 = -\tau \sum_{i=1}^{m} i\hat{a}_i \qquad B_1 = -\tau \sum_{i=1}^{n} i\hat{b}_i$$

$$A_2 = \frac{\tau^2}{2} \sum_{i=1}^{m} i^2\hat{a}_i \qquad B_2 = \frac{\tau^2}{2} \sum_{i=1}^{n} i^2\hat{b}_i$$

$$A_3 = -\frac{\tau^3}{6} \sum_{i=1}^{m} i^3\hat{a}_i \qquad B_3 = -\frac{\tau^3}{6} \sum_{i=1}^{n} i^3\hat{b}_i$$

500

$$D_0 = A_0/B_0$$
$$D_1 = (A_1 - D_0 B_1)/B_0$$
$$D_2 = (A_2 - D_0 B_2 - D_1 B_1)/B_0$$
$$D_3 = (A_3 - D_0 B_3 - D_1 B_2 - D_2 B_1)/B_0$$

502

$$\widetilde{h}_0 = D_0$$
$$\widetilde{h}_1 = D_1 - \frac{\tau}{2} \widetilde{h}_0$$
$$\widetilde{h}_2 = D_2 - \frac{\tau}{2} \widetilde{h}_1 - \frac{\tau^2}{6} \widetilde{h}_0$$
$$\widetilde{h}_3 = D_3 - \frac{\tau}{2} \widetilde{h}_2 - \frac{\tau^2}{6} \widetilde{h}_1 - \frac{\tau^3}{24} \widetilde{h}_0$$

504

$$\widetilde{G}_P(S) = \frac{1}{\widetilde{h}_0 + \widetilde{h}_1 s + \widetilde{h}_2 s^2 + \widetilde{h}_3 s^3}$$

506

# F I G. 6

START

MODE SELECTION — 600

PID

PI

602

$$\sigma^2 - 5 \frac{\widetilde{h_1} + \frac{\Delta t}{2} \widetilde{h_0}}{\widetilde{h_0}} \sigma + 10 \frac{\widetilde{h_2} + \frac{\Delta t}{2} \widetilde{h_1}}{\widetilde{h_0}} = 0$$

604

$$\sigma^3 - 20 \frac{\widetilde{h_1} + \Delta t \widetilde{h_0}}{\widetilde{h_0}} \sigma^2 + 100 \frac{\widetilde{h_2} + \Delta t \widetilde{h_1} + \frac{\Delta t^2}{2} \widetilde{h_0}}{h_0} \sigma$$

$$-200 \frac{\widetilde{h_3} + \Delta t \widetilde{h_2} + \frac{\Delta t^2}{3} \widetilde{h_1}}{\widetilde{h_0}} = 0$$

$$\sigma^* = MIN[\sigma]$$ — 606

608

$$c^{(0)} = \frac{\widetilde{h_0}}{\sigma^*}$$

$$c^{(1)} = (\widetilde{h_1} - \frac{\widetilde{h_0}}{2} \sigma^*) / \sigma^*$$

$$c^{(2)} = \left\{ (\widetilde{h_2} + \frac{\Delta t}{2} \widetilde{h_1}) - (\frac{\widetilde{h_1}}{2} + \frac{\Delta t}{4} \widetilde{h_0}) \sigma^* + \frac{\widetilde{h_0}}{10} \sigma^{*2} \right\} / \sigma^*$$

610

$$Kc = c^{(1)}$$

$$Ti = c^{(1)} / c^{(0)}$$

$$Td = c^{(2)} / c^{(1)}$$

END